# FASCICULE DE BREVET EUROPEEN

(11) **EP 4 480 815 B1**
(45) Date de publication et mention de la délivrance du brevet: **05.08.2026**
(21) Numéro de dépôt: 24182541.3
(22) Date de dépôt: 17.06.2024
(51) Int. Cl.: B64C 13/50, B64C 25/24, B64D 15/12, H02P 3/06

(54) **SYSTEME AMELIORE DE COMMANDE ET DE FREINAGE D'UN ELEMENT MOBILE ARTICULE D'AERONEF**
VERBESSERTES SYSTEM ZUR STEUERUNG UND ZUM ABBREMSEN EINES MITTELS EINES GELENKS BEWEGLICHEN ELEMENTS EINES FLUGZEUGS
IMPROVED SYSTEM FOR CONTROLLING AND BRAKING AN ARTICULATED MOBILE ELEMENT OF AN AIRCRAFT

(30) Priorité: 19.06.2023 FR 2306272
(43) Date de publication de la demande: 25.12.2024
(73) Titulaire: Airbus Operations (S.A.S.), 31060 Toulouse Cedex 9 (FR)
(72) Inventeur: BRUNEL, Luc, 31060 TOULOUSE (FR); IMMORDINO, Thierry, 31060 TOULOUSE (FR); WARNET, Stéphane, 31060 TOULOUSE (FR); CREBASSOL, Florent, 31060 TOULOUSE (FR)
(74) Mandataire: Cabinet Le Guen Maillet

(56) Documents cités:
- US-A1- 2012 013 176
- US-B2- 10 703 462
- US-B2- 8 614 555

## Description

### DOMAINE TECHNIQUE

La présente invention concerne le domaine des éléments mobiles articulés d'aéronefs et concerne plus particulièrement un système de commande configuré pour opérer un freinage d'un élément mobile articulé d'aéronef.

### ETAT DE LA TECHNIQUE ANTERIEURE

Les aéronefs comportent des éléments mobiles articulés qui peuvent être déplacés et orientés afin d'agir sur la poussée, la vitesse, la portance ou l'attitude de l'aéronef ou encore par exemple afin de déployer des éléments de roulage de l'aéronef. Un élément mobile articulé est généralement contrôlé par un moteur électrique d'élément mobile articulé fournissant un couple mécanique à l'élément mobile articulé afin de le mouvoir.

Toutefois, il peut arriver que l'élément mobile articulé, sous l'effet de sa masse et de sa vitesse, génère un couple mécanique qui est transmis au moteur d'élément mobile articulé. Le moteur d'élément mobile articulé se met alors à fonctionner en générateur. Dans un tel cas, le mouvement de l'élément mobile articulé n'est plus contrôlé par le moteur d'élément mobile articulé mais dépend de paramètres de masse et de vitesse. Il est alors nécessaire de freiner un tel mouvement pour éviter que la vitesse de l'élément mobile articulé n'entraîne un endommagement de l'élément mobile articulé ou d'éléments environnants de l'élément mobile tels qu'une butée de retenue de l'élément mobile articulé ou une structure supportant une telle butée de retenue. En outre, il est souhaitable de fournir une solution à la fois peu encombrante et légère.

Le document US 2012/0013176 A1 décrit une unité de distribution électrique améliorée (EDU) d'un aéronef qui comprend un circuit de commande d'alimentation disposé pour communiquer avec une source d'alimentation, un circuit de commande de charge régénérative en communication avec le circuit de commande d'alimentation et disposé pour communiquer avec une charge régénérative, et un circuit de commande de charge passive en communication avec le circuit de commande d'alimentation et le circuit de commande de charge régénérative, le circuit de commande de charge passive étant disposé de manière à communiquer avec une charge passive. Le circuit de commande de charge régénérative et le circuit de commande de charge passive sont disposés de manière à établir un chemin conducteur entre la charge régénérative et la charge passive en réponse au fonctionnement de la charge régénérative. Certaines charges peuvent être des dispositifs régénératifs tels que des actionneurs destinés à actionner les surfaces de contrôle de l'aéronef. Certaines charges peuvent être des charges passives, telles qu'une charge antigivrage.

Des systèmes similaires sont décrits dans US 10 703 462 B2 et US 8 614 555 B2.

### EXPOSE DE L'INVENTION

Il est proposé ici un système de contrôle selon la revendication 1.

Ainsi, il est possible de freiner aisément le mouvement de l'élément mobile articulé grâce à la consommation, par le dispositif consommateur de courant électrique, d'énergie électrique fournie par le moteur et donc par la limitation du courant électrique fourni par le moteur, ce qui permet de créer un couple résistant. En outre, l'encombrement, le coût et les masses sont optimisés puisque le dispositif consommateur de courant électrique n'est pas uniquement dédié au freinage de l'élément mobile articulé mais est utilisé pour effectuer du dégivrage tant que l'élément mobile articulé ne nécessite pas d'être freiné.

Selon un mode de réalisation particulier, le système de commande comporte en outre un premier dispositif de commutation et un second dispositif de commutation, le premier dispositif de commutation étant relié électriquement au deuxième dispositif de commutation par un lien électrique, dit lien intermédiaire. Le premier dispositif de commutation est relié électriquement à l'alimentation électrique, au moteur et au lien intermédiaire, le deuxième dispositif de commutation est relié électriquement à l'alimentation électrique, au dispositif consommateur de courant électrique et au lien intermédiaire. Le premier dispositif de commutation est configuré pour inhiber une connexion électrique entre le moteur et le lien intermédiaire tant qu'aucune commande de freinage n'est reçue et lorsqu'une commande d'arrêt du freinage est reçue. Le premier dispositif de commutation est configuré pour établir une connexion électrique entre le moteur et le lien intermédiaire lorsqu'une commande de freinage est reçue. Le deuxième dispositif de commutation est configuré pour établir une connexion électrique entre le dispositif consommateur de courant électrique et le lien intermédiaire lorsqu'une commande de freinage est reçue.

Selon un mode de réalisation particulier, le premier dispositif de communication est configuré pour établir la connexion électrique entre le moteur et le lien intermédiaire lorsqu'une commande de freinage est reçue et lorsqu'en outre une information représentative d'une absence de connexion électrique entre l'alimentation électrique et le dispositif consommateur de courant électrique est reçue. Le deuxième dispositif de commutation est configuré pour envoyer une information représentative d'une absence de connexion électrique entre l'alimentation électrique et le dispositif consommateur de courant électrique dès que la connexion électrique entre l'alimentation électrique et le dispositif consommateur de courant électrique est inhibée.

Il est aussi proposé ici un aéronef selon la revendication 4, comportant le système de contrôle dans l'un quelconque de ses modes de réalisation.

Il est aussi proposé ici un procédé de commande d'un élément mobile articulé selon la revendication 5.

Selon un mode de réalisation particulier, le système de commande comporte un premier dispositif de commutation et un second dispositif de commutation, le premier dispositif de commutation étant relié électriquement au deuxième dispositif de commutation par un lien électrique, dit lien intermédiaire, le premier dispositif de commutation étant relié électriquement à l'alimentation électrique, au moteur et au lien intermédiaire, le deuxième dispositif de commutation étant relié électriquement à l'alimentation électrique, au dispositif consommateur de courant électrique et au lien intermédiaire. Le procédé comprend en outre :
- inhiber une connexion électrique entre le moteur et le lien intermédiaire tant qu'aucune commande de freinage n'est reçue et lorsqu'une commande d'arrêt du freinage est reçue,
- établir la connexion électrique entre le moteur et le lien intermédiaire lorsqu'une commande de freinage est reçue,
- établir une connexion électrique entre le dispositif consommateur de courant électrique et le lien intermédiaire lorsqu'une commande de freinage est reçue.

Il est également proposé ici un programme d'ordinateur selon la revendication 7, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque ledit programme est exécuté par le processeur. L'invention concerne également un support de stockage d'informations selon la revendication 8, stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un aéronef qui comporte un système de commande d'un élément mobile articulé ;
[Fig. 2A] illustre schématiquement le système de commande d'un élément mobile articulé selon un premier mode de réalisation, lorsque le système de commande est dans un premier état de connexion ;
[Fig. 2B] illustre schématiquement le système de commande d'un élément mobile articulé selon le premier mode de réalisation, lorsque le système de commande est dans un deuxième état de connexion ;
[Fig. 3A] illustre schématiquement le système de commande d'un élément mobile articulé selon un second mode de réalisation lorsque le système de commande est dans le premier état de connexion ;
[Fig. 3B] illustre schématiquement le système de commande d'un élément mobile articulé selon le second mode de réalisation lorsque le système de commande est dans le deuxième état de connexion ;
[Fig. 4] illustre schématiquement un exemple de plateforme matérielle adaptée pour implémenter le système de commande ;
[Fig. 5] illustre schématiquement un procédé de commande de l'élément mobile articulé implémenté par le système de commande de l'élément mobile articulé ;
[Fig. 6A] illustre schématiquement une étape du procédé de commande de l'élément mobile articulé implémenté par le système de commande de l'élément mobile articulé ;
[Fig. 6B] illustre schématiquement une autre étape du procédé de commande de l'élément mobile articulé implémenté par le système de commande de l'élément mobile articulé ;
[Fig. 7] illustre schématiquement un procédé de commande de l'élément mobile articulé implémenté par un premier dispositif de commutation du système de commande de l'élément mobile articulé ; et
[Fig. 8] illustre schématiquement un procédé de commande de l'élément mobile articulé implémenté par un deuxième dispositif de commutation du système de commande de l'élément mobile articulé.

### EXPOSE DETAILLE DE MODES DE REALISATION

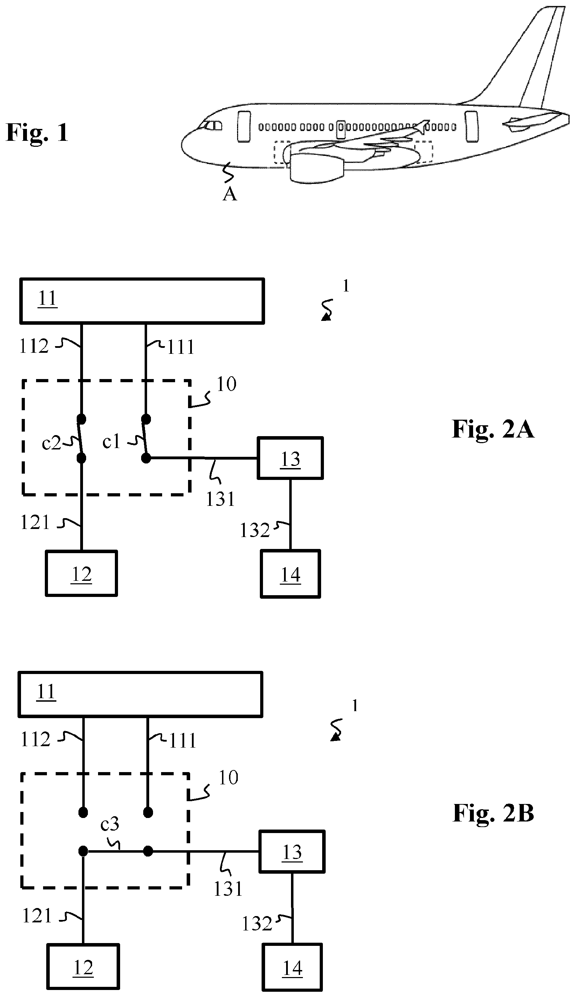

La **Fig. 1** illustre schématiquement un aéronef A qui comporte un système de commande 10 (représenté en Fig. 2A) et de freinage d'un élément mobile articulé 14 (représenté en Fig. 2A) de l'aéronef A.

L'élément mobile articulé 14 de l'aéronef A est par exemple un élément de la voilure de l'aéronef A tel qu'une partie d'une aile ou d'un empennage de l'aéronef A, par exemple un empennage vertical ou un empennage horizontal. L'élément mobile articulé 14 peut notamment être un aileron, un volet, un dispositif hypersustentateur ou un becquet. Selon un exemple de réalisation, l'élément mobile articulé 14 est un inverseur de poussée, qui, lorsqu'il est déployé, redirige vers l'avant de l'aéronef A un flux d'air généré par un moteur de propulsion de l'aéronef A. Cela permet ainsi de ralentir fortement l'aéronef A, par exemple après un atterrissage. En revanche, dans d'autres phases de vol, il est nécessaire que l'inverseur de poussée soit replié afin que le flux d'air généré par le moteur de propulsion soit dirigé vers l'arrière et permette ainsi à l'aéronef A d'accélérer, d'avancer et de se maintenir en altitude. Dans un mode de réalisation, l'élément mobile articulé 14 est un train d'atterrissage dont le déploiement est nécessaire lors d'une phase de roulage, de décollage ou d'atterrissage de l'aéronef A, le train d'atterrissage devant être en revanche replié lorsque l'aéronef A est en vol. Dans un mode de réalisation, l'élément mobile articulé 14 est une roue ou un ensemble de roues qui est entraîné en rotation pour permettre à l'aéronef A de circuler au sol.

Le déplacement de l'élément mobile articulé 14 est contrôlé par un moteur électrique d'élément mobile articulé 14, dit moteur 13 (représenté en Fig. 2A), qui fournit de l'énergie mécanique à l'élément mobile articulé 14. Le déplacement de l'élément mobile articulé 14 peut être effectué dans deux sens opposés et permet d'atteindre une pluralité de positions. Chaque position de la pluralité de positions est comprise entre deux positions extrêmes telles qu'une position repliée et une position déployée. Lorsque l'élément mobile articulé 14 est une roue, l'élément mobile articulé 14 ne comporte pas de position extrême mais se déplace en rotation selon deux sens de rotation opposés.

Selon un exemple, l'aéronef A comporte en outre une manette d'actionnement de l'élément mobile articulé 14 permettant à un pilote d'envoyer des instructions de déplacement de l'élément mobile articulé 14. Selon un autre exemple, des instructions de déplacement de l'élément mobile articulé 14 sont envoyées par un dispositif de commande automatique ne nécessitant pas d'action du pilote.

L'aéronef A comporte une avionique configurée pour recevoir et traiter les instructions de déplacement de l'élément mobile articulé 14 en provenance par exemple de la manette d'actionnement. L'avionique est configurée pour transmettre au moteur 13, par exemple via le système de commande 10, des commandes de déplacement de l'élément mobile articulé 14 selon les instructions de déplacement reçues et en tenant compte de conditions de sécurité.

L'avionique est en outre configurée pour transmettre au système de commande 10 des commandes de freinage de l'élément mobile articulé 14, dites commandes de freinage, lorsque le mouvement de l'élément mobile articulé 14 génère un couple mécanique, sous l'effet de sa masse et de sa vitesse. La commande de freinage s'oppose au déplacement de l'élément mobile articulé 14 contrôlé par le moteur 13. Une commande de freinage se distingue donc d'une commande de déplacement car la commande de déplacement vise à agir sur la vitesse de l'élément mobile articulé 14 en injectant une plus ou moins grande quantité de courant électrique dans le moteur 13 par une alimentation électrique de sorte à agir sur la vitesse du moteur 13. Une commande de freinage est au contraire destinée à contrôler la vitesse de l'élément mobile articulé 14 en contrôlant la consommation, effectuée par un dispositif consommateur de courant, de la quantité de courant électrique généré par le moteur 13. Une commande de freinage contrôle l'élément mobile articulé 14 par contrôle du courant électrique qui est fourni par le moteur 13 fonctionnant en générateur sous l'effet d'un couple mécanique généré par le mouvement de l'élément mobile articulé. Le freinage de l'élément mobile articulé 14 est à interpréter ici comme un ralentissement, un maintien à vitesse constante ou une accélération, tant que la vitesse de l'élément mobile articulé 14 résultant du freinage reste inférieure à la vitesse de l'élément mobile articulé 14 sans freinage. Autrement dit, lorsqu'une commande de freinage est transmise au système de commande 10, l'énergie électrique envoyée au moteur 13 et consommée s'oppose au mouvement de l'élément mobile articulé 14.

Une commande de freinage peut ainsi être envoyée par l'avionique après une commande de déplacement de l'élément mobile articulé 14. Selon un exemple, l'avionique transmet une commande de freinage lorsqu'une condition de vitesse ou de position de l'élément mobile articulé 14 est atteinte, par exemple par comparaison d'une vitesse ou d'une position détectée par un capteur à un seuil de vitesse ou de position prédéfinie.

L'avionique est en outre configurée pour transmettre au système de commande 10 une commande d'arrêt du freinage de l'élément mobile articulé 14 lorsque l'élément mobile articulé 14 ne nécessite plus d'être freiné, autrement dit lorsque le déplacement de l'élément mobile articulé 14 est à nouveau contrôlable par le moteur 13 alimenté électriquement. Une commande d'arrêt du freinage de l'élément mobile articulé est par exemple envoyée lorsque la vitesse de l'élément mobile articulé 14 redescend en-dessous du seuil de vitesse prédéfini ou lorsqu'une puissance électrique délivrée par le moteur 13 fonctionnant en générateur est inférieure à une puissance prédéfinie.

La **Fig. 2A** illustre schématiquement le système de commande 10 de l'élément mobile articulé 14 selon un premier mode de réalisation.

Le système de commande 10 est implémenté dans un système de contrôle 1 comportant une alimentation électrique 11, l'élément mobile articulé 14 et le moteur 13 électrique d'élément mobile articulé 14. L'élément mobile articulé 14 est actionné par le moteur 13 qui fournit de l'énergie mécanique par un lien mécanique 132.

Le système de contrôle 1 comporte en outre un dispositif consommateur de courant électrique 12 configuré pour consommer un courant électrique. Le dispositif consommateur de courant électrique 12 comporte par exemple au moins une résistance électrique et/ou au moins un composant piézoélectrique. Le dispositif consommateur de courant électrique 12 permet d'opérer une fonction de dégivrage par exemple en produisant de la chaleur par dissipation thermique, afin d'assurer une protection contre la formation de glace. La fonction de dégivrage permet par exemple d'éviter une perturbation d'un écoulement aérodynamique dans le cas d'un dégivrage de surfaces externes de l'aéronef A, d'assurer une bonne visibilité dans le cas du dégivrage d'un pare-brise, ou encore d'assurer une acquisition fiable de données, dans le cas du dégivrage de capteurs. Pour assurer la fonction de dégivrage, le dispositif consommateur de courant électrique 12 doit être alimenté électriquement. Le dispositif consommateur de courant électrique 12 peut faire partie d'un système de dégivrage de l'aéronef A comportant une pluralité de dispositifs de dégivrage électriques.

Le système de contrôle 1 comporte un premier lien électrique d'alimentation 111 reliant électriquement l'alimentation électrique 11 au système de commande 10, un deuxième lien électrique d'alimentation 112 reliant électriquement l'alimentation électrique 11 au système de commande 10, un lien électrique 131 reliant électriquement le système de commande 10 au moteur 13 et un lien électrique 121 reliant électriquement le système de commande 10 au dispositif consommateur de courant électrique 12. Chaque lien électrique permet de faire circuler du courant entre deux éléments qu'il relie.

Le système de commande 10 est configuré pour établir des connexions c1, c2, c3 (la connexion c3 étant illustrée en Fig. 2B), autrement dit opérer des connexions, et inhiber les connexions c1, c2, c3, autrement dit opérer des déconnexions, afin de connecter et déconnecter électriquement l'alimentation électrique 11 et le moteur 13, l'alimentation électrique 11 et le dispositif consommateur de courant électrique 12, et le moteur 13 et le dispositif consommateur de courant électrique 12. L'alimentation électrique 11 et le moteur 13 peuvent être reliés électriquement par l'établissement d'une première connexion c1 entre le premier lien électrique d'alimentation 111 et le lien électrique 131. L'alimentation électrique 11 et le dispositif consommateur de courant électrique 12 peuvent être reliés électriquement par l'établissement d'une deuxième connexion c2 entre le deuxième lien électrique d'alimentation 112 et le lien électrique 121. Le moteur 13 peut être relié électriquement au dispositif consommateur de courant électrique 12 par l'établissement d'une troisième connexion c3 entre le lien électrique 121 et le lien électrique 131.

Le système de commande 10 est en outre configuré pour communiquer avec l'avionique afin de recevoir des commandes de freinage et des commandes d'arrêt du freinage de l'élément mobile articulé 14.

Astucieusement et avantageusement, le même dispositif consommateur de courant électrique 12 permet d'opérer une fonction de dégivrage et d'opérer une fonction de freinage de l'élément mobile articulé 14. Le dispositif consommateur de courant électrique 12 permet d' opérer la fonction de dégivrage lorsque ledit dispositif consommateur de courant électrique 12 est alimenté électriquement, par exemple par l'alimentation électrique 11. En outre, le dispositif consommateur de courant électrique 12 permet d'opérer la fonction de freinage de l'élément mobile articulé 14 lorsque ledit dispositif consommateur de courant électrique 12 est relié électriquement au moteur 13 et consomme de l'énergie électrique qui est générée par le moteur 13 sous l'effet d'un couple mécanique transmis par l'élément mobile articulé 14.

Le système de commande 10 comporte deux états de connexion. Un premier état de connexion, illustré à la Fig. 2A, permet d'assurer une fonction de déplacement de l'élément mobile articulé 14 en alimentant électriquement le moteur 13 de manière sélective par l'alimentation électrique 11, et permet en outre au dispositif consommateur de courant 12 d'assurer la fonction de dégivrage. Un deuxième état de connexion, illustré à la Fig. 2B, permet au dispositif consommateur de courant 12 d'assurer la fonction de freinage de l'élément mobile articulé 14.

La Fig. 2A représente le système de commande 10 dans le premier état de connexion.

Le premier état de connexion du système de commande 10 permet de déplacer sélectivement l'élément mobile articulé 14, par exemple pour le déployer ou pour le replier, tout en permettant au dispositif consommateur de courant électrique 12 d'assurer la fonction de dégivrage. Le système de commande 10 est dans le premier état de connexion tant qu'aucune commande de freinage n'est reçue, et lorsqu'une commande d'arrêt du freinage de l'élément mobile articulé 14 est reçue par le système de commande 10 en provenance de l'avionique.

Dans le premier état de connexion, le système de commande 10 permet l'établissement de la première connexion c1 afin de relier électriquement le moteur 13 et l'alimentation électrique 11. Ainsi, le moteur 13 peut fournir de l'énergie mécanique à l'élément mobile articulé 14 afin de le mouvoir. Selon un exemple de réalisation, la première connexion c1 est établie de manière stable et il existe en outre un dispositif permettant de relier électriquement, de manière sélective, le moteur 13 à l'alimentation électrique 11, en fonction de conditions supplémentaires propres au déplacement de l'élément mobile articulé 14, dites conditions de déplacement. Alternativement, la première connexion c1 est établie de manière sélective en fonction desdites conditions de déplacement. Ainsi, la connexion électrique entre le moteur 13 et l'alimentation électrique 11 est permise mais dépend en outre de conditions de déplacement de l'élément mobile articulé 14. Lesdites conditions de déplacement déterminent par exemple la vitesse et le sens de rotation du moteur 13.

En outre, dans le premier état de connexion, le système de commande 10 permet l'établissement de la deuxième connexion c2 afin de permettre une connexion électrique entre le dispositif consommateur de courant électrique 12 et l'alimentation électrique 11. Le dispositif consommateur de courant électrique 12 peut ainsi assurer la fonction de dégivrage. Selon un exemple de réalisation, la deuxième connexion c2 est établie de manière stable et il existe en outre un dispositif permettant de relier électriquement, de manière sélective, le dispositif consommateur de courant électrique 12 à l'alimentation électrique 11, en fonction de conditions supplémentaires, propres à la fonction de dégivrage, dites conditions de dégivrage. Alternativement, la deuxième connexion c2 est établie de manière sélective en fonction desdites conditions de dégivrage. Ainsi, la connexion électrique entre le dispositif consommateur de courant électrique 12 et l'alimentation électrique 11 est permise mais peut en outre dépendre de conditions de dégivrage.

Dans le premier état de connexion, le système de commande 10 empêche en outre toute connexion entre le moteur 13 et le dispositif consommateur de courant électrique 12. La troisième connexion c3 est donc nécessairement inhibée.

La **Fig. 2B** illustre schématiquement le système de commande d'un élément mobile articulé 14 selon le premier mode de réalisation, lorsque le système de commande 10 est dans le deuxième état de connexion.

Le deuxième état de connexion du système de commande 10 permet d'assurer le freinage de l'élément mobile articulé 14. Dans le deuxième état de connexion, la fonction de dégivrage assurée par le dispositif consommateur de courant 12 est potentiellement dégradée.

Le système de commande 10 passe dans le deuxième état de connexion lorsqu'une commande de freinage de l'élément mobile articulé 14 est reçue par le système de commande 10 en provenance de l'avionique. Le système de commande 10 établit la troisième connexion c3 afin de relier électriquement le moteur 13 au dispositif consommateur de courant électrique 12. Ainsi, l'énergie électrique fournie par le moteur 13 est consommée par le dispositif consommateur de courant électrique 12 et transformée en chaleur, ce qui permet de freiner le mouvement de l'élément mobile articulé 14 et évite ainsi un endommagement de l'élément mobile articulé 14 et d'éléments environnants de l'élément mobile articulé 14.

En outre, le système de commande 10 empêche toute connexion entre l'alimentation électrique 11 et le moteur 13. La première connexion c1 est donc nécessairement inhibée (i.e. coupée ou absente). La deuxième connexion c2 est en outre inhibée afin d'empêcher une connexion électrique entre l'alimentation électrique 11 et le moteur 13 par le biais du deuxième lien d'alimentation électrique 112.

Lorsque le système de commande 10 est dans le deuxième état de connexion, le dispositif consommateur de courant électrique 12 n'est pas alimenté électriquement par l'alimentation électrique 11, ce qui entraîne une dégradation potentielle de la fonction de dégivrage. Toutefois, le dispositif consommateur de courant électrique 12 étant alimenté électriquement par le moteur 13 qui fonctionne en générateur, la fonction de dégivrage peut être au moins partiellement assurée par le dispositif consommateur de courant électrique 12, selon l'énergie électrique fournie par le moteur 13 fonctionnant en générateur.

Lorsque le système de dégivrage de l'aéronef A comporte une pluralité de dispositifs de dégivrage électriques, le système de dégivrage peut permettre à une partie de la pluralité des dispositifs de dégivrage électriques d'assurer la fonction de dégivrage tandis qu'une autre partie de la pluralité des dispositifs de dégivrage électriques est utilisée pour assurer le freinage de l'élément mobile articulé 14. Ainsi, la fonction de dégivrage peut ne pas être altérée lors du freinage de l'élément mobile articulé 14.

Lorsque l'élément mobile articulé 14 est un inverseur de poussée, le freinage de l'élément mobile articulé 14 intervient après une phase d'atterrissage, lorsque l'aéronef A est au sol. La fonction de dégivrage n'est donc pas indispensable au bon fonctionnement et à la sécurité de l'aéronef A. En outre, le freinage de l'élément mobile articulé 14 est implémenté sur une durée suffisamment courte pour qu'une réduction éventuelle des performances de la fonction de dégivrage soit acceptable en termes de sécurité et de fonctionnement de l'aéronef A.

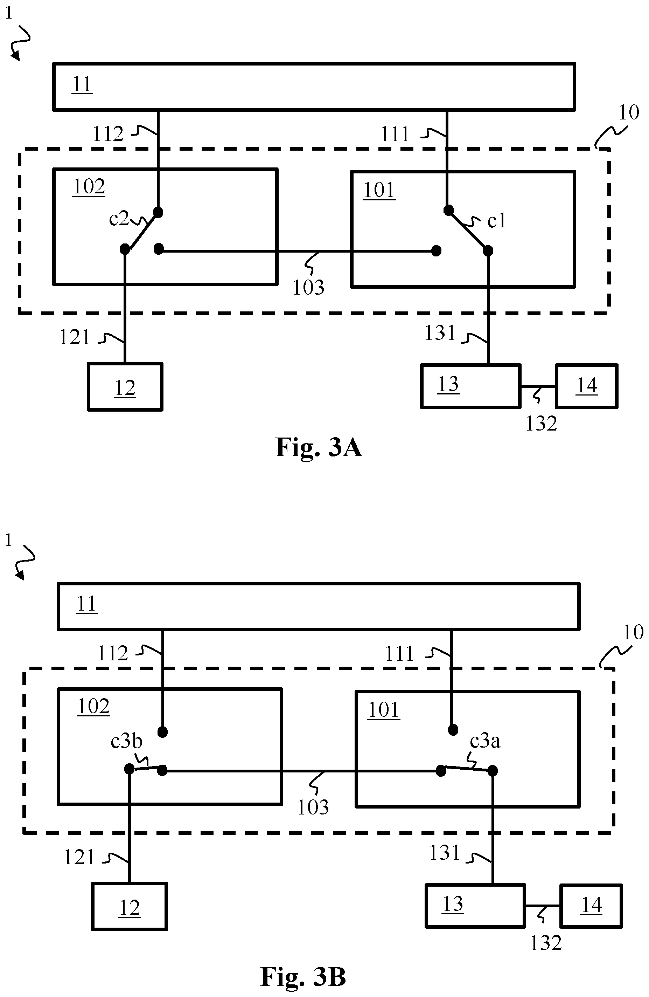

La **Fig. 3A** illustre schématiquement le système de commande 10 d'un élément mobile articulé 14 selon un second mode de réalisation lorsque le système de commande 10 est dans le premier état de connexion.

Dans le deuxième mode de réalisation, le système de commande 10 comporte un premier dispositif de commutation 101 et un deuxième dispositif de commutation 102. Le premier dispositif de commutation 101 est relié électriquement au deuxième dispositif de commutation 102 par un lien électrique, dit lien intermédiaire 103.

En outre, chacun des premier et deuxième dispositifs de commutation 101, 102 est configuré pour communiquer avec le système de commande 10 ou l'avionique de l'aéronef A afin de recevoir des commandes de freinage et d'arrêt du freinage de l'élément mobile articulé 14. Les premier et deuxième dispositifs de commutation 101, 102 peuvent en outre être configurés pour communiquer entre eux.

Le premier dispositif de commutation 101 est relié électriquement à l'alimentation électrique 11 par le biais du premier lien électrique d'alimentation 111 et relié électriquement au moteur 13 par le lien électrique 131.

Le deuxième dispositif de commutation 102 est relié électriquement à l'alimentation électrique 11 par le biais du deuxième lien électrique d'alimentation 112 et relié électriquement au dispositif consommateur de courant électrique 12 par le lien électrique 121.

Lorsque le système de commande 10 du second mode de réalisation est dans le premier état de connexion, le premier dispositif de commutation 101 permet l'établissement, de manière stable ou sélective en fonction de conditions de déplacement, de la première connexion c1 entre le premier lien électrique d'alimentation 111 et le lien électrique 131. Ainsi, le moteur 13 est alimenté électriquement de manière sélective afin de contrôler le déplacement de l'élément mobile articulé 14. En outre, le deuxième dispositif de commutation 102 permet l'établissement, de manière stable ou sélective en fonction de conditions de dégivrage, de la deuxième connexion c2 entre le deuxième lien électrique d'alimentation 112 et le lien électrique 121, permettant d' alimenter électriquement le dispositif consommateur de courant électrique 12 par l'alimentation électrique 11. Ainsi, le dispositif consommateur de courant électrique 12 peut assurer la fonction de dégivrage.

La **Fig. 3B** illustre schématiquement le système de commande 10 d'un élément mobile articulé 14 selon le second mode de réalisation lorsque le système de commande 10 est dans le deuxième état de connexion.

Lorsque le système de commande 10 du second mode de réalisation est dans le deuxième état de connexion, le premier dispositif de commutation 101 établit une quatrième connexion c3a entre le lien électrique 131 et le lien intermédiaire 103. En outre, le deuxième dispositif de commutation 102 établit une cinquième connexion c3b entre le lien intermédiaire 103 et le lien électrique 121. Ainsi, la combinaison des quatrième et cinquième connexions c3a, c3b, permet de relier électriquement le moteur 113 au dispositif consommateur de courant électrique 112.

Dans le deuxième état de connexion, comme pour le premier mode de réalisation du système de commande 10, la première connexion c1 et la deuxième connexion c2 sont nécessairement inhibées.

Dans un mode de réalisation alternatif, le deuxième dispositif de commutation 102 comporte une connexion électrique permanente entre le lien intermédiaire 103 et le dispositif consommateur de courant électrique 12. Dit autrement, la cinquième connexion c3b est toujours présente.

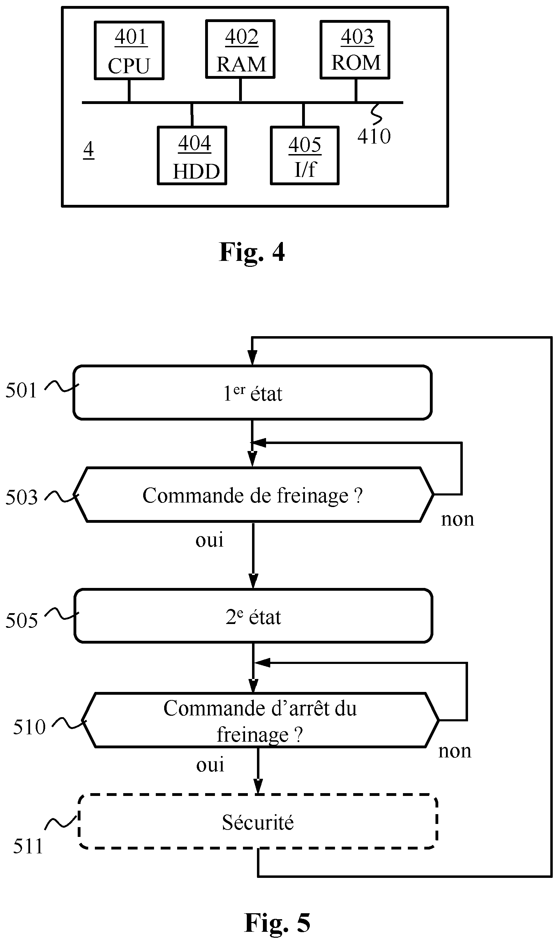

La **Fig. 4** illustre schématiquement un exemple de plateforme matérielle permettant d'implémenter, sous forme de circuiterie électronique, une unité de contrôle du système de commande 10.

La plateforme matérielle comporte, reliés par un bus de communication 410 : un processeur ou CPU (« Central Processing Unit » en anglais) 401 ; une mémoire vive RAM (« Random Access Memory » en anglais) 402 ; une mémoire morte 403, par exemple de type ROM (« Read Only Memory » en anglais) ou EEPROM (« Electrically-Erasable Programmable ROM » en anglais), telle qu'une mémoire Flash ; une unité de stockage, telle qu'un disque dur HDD (« Hard Disk Drive » en anglais) 404, ou un lecteur de support de stockage, tel qu'un lecteur de cartes SD (« Secure Digital » en anglais) ; et un gestionnaire d'interfaces I/f 405.

Le gestionnaire d'interfaces I/f 405 permet à l'unité de contrôle d'interagir avec l'avionique de l'aéronef A, et avec les premier et deuxième dispositifs de commutation 101, 102, le cas échéant.

Le processeur 401 est capable d'exécuter des instructions chargées dans la mémoire vive 402 à partir de la mémoire morte 403, d'une mémoire externe, d'un support de stockage (tel qu'une carte SD), ou d'un réseau de communication. Lorsque la plateforme matérielle est mise sous tension, le processeur 401 est capable de lire de la mémoire vive 402 des instructions et de les exécuter. Ces instructions forment un programme d'ordinateur causant l'implémentation, par le processeur 401, de tout ou partie des étapes, procédés et fonctionnements décrits ici en relation avec le système de commande 10.

Tout ou partie des étapes, procédés et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, le système de commande 10 comporte de la circuiterie électronique adaptée et configurée pour implémenter les procédés et étapes décrits ici.

Selon le second mode de réalisation du système de commande 10, le premier dispositif de commutation 101, respectivement, le deuxième dispositif de commutation 102, comporte une unité de contrôle implémentée, sous forme de circuiterie électronique, par une plateforme matérielle similaire à celle illustrée en Fig. 4.

Le gestionnaire d'interfaces I/f 405 de l'unité de contrôle du premier dispositif de commutation 101 permet à ladite unité de contrôle d'interagir avec l'avionique de l'aéronef A et/ou avec le système de commande 10 et avec le deuxième dispositif de commutation 102 le cas échéant.

Le gestionnaire d'interfaces I/f 405 de l'unité de contrôle du deuxième dispositif de commutation 102 permet à ladite unité de contrôle d'interagir avec l'avionique de l'aéronef A et/ou avec le système de commande 10 et avec le premier dispositif de commutation 101 le cas échéant.

D'une manière générale, le premier dispositif de commutation 101, respectivement le deuxième dispositif de commutation 102, comporte de la circuiterie électronique adaptée et configurée pour implémenter les procédés et étapes décrits ici en relation avec le premier dispositif de commutation 101, respectivement le deuxième dispositif de commutation 102.

La **Fig. 5** illustre schématiquement un procédé de commande de l'élément mobile articulé 14 implémenté par le système de commande 10.

Dans une première étape 501, le système de commande 10 est dans le premier état de connexion. L'établissement de la première connexion c1 est permis afin d'autoriser l'alimentation électrique du moteur 13 pour contrôler le déplacement de l'élément mobile articulé 14. En outre, l'établissement de la deuxième connexion c2 est permis afin de permettre au dispositif consommateur de courant électrique 12 d'assurer sa fonction de dégivrage. En outre, la troisième connexion c3 est inhibée. L'inhibition de la troisième connexion c3 est ensuite maintenue jusqu'à ce que le système de commande 10 quitte le premier état de connexion.

Dans une étape 503 suivante, le système de commande 10 détermine si une commande de freinage est reçue par le système de commande 10 en provenance de l'avionique. Si c'est le cas, une étape 505 est effectuée. Sinon, le système de commande 10 reste à l'étape 503.

A l'étape 505, le système de commande 10 passe du premier état de connexion au deuxième état de connexion. Les première et deuxième connexions c1, c2 sont inhibées, afin d'empêcher toute alimentation électrique du moteur 13. En outre, la troisième connexion c3 est établie afin de relier électriquement le dispositif consommateur de courant électrique 12 au moteur 13. L'inhibition des première et deuxième connexions c1, c2 et l'établissement de la troisième connexion c3 sont ensuite maintenus jusqu'à ce que le système de commande 10 repasse dans le premier état de connexion.

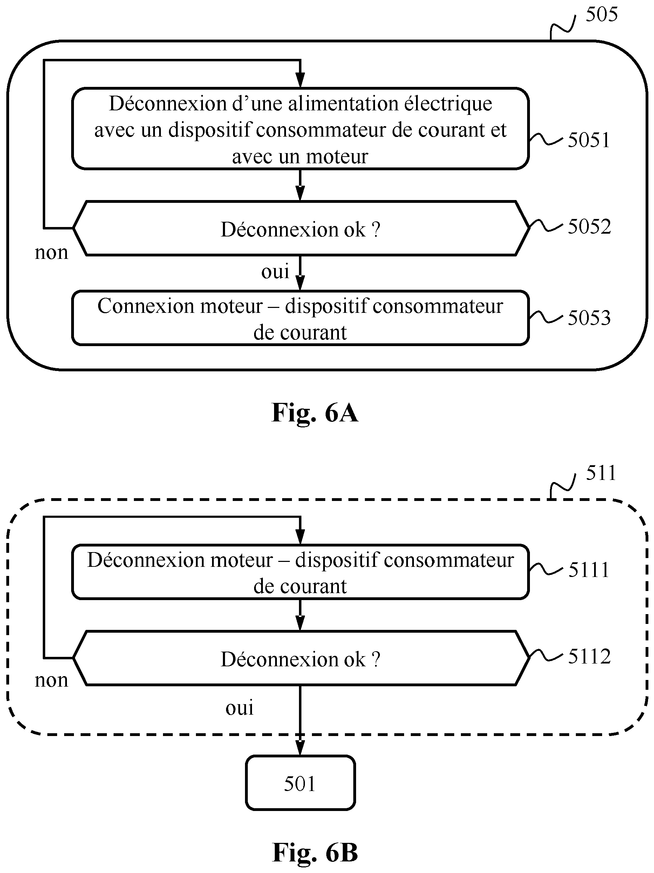

Un mode de réalisation particulier de l'étape 505 est illustré à la **Fig. 6A****.** Dans une première étape 5051, le système de commande 10 inhibe la première connexion c1 et la deuxième connexion c2. Dans une étape 5052 suivante, le système de commande 10 vérifie que la deuxième connexion c2 est effectivement inhibée. Par exemple, le système de commande 10 effectue un test électrique par mesure d'un courant passant à travers le lien électrique 121 et par détermination que la deuxième connexion c2 est inhibée si la mesure de courant est inférieure à un seuil prédéfini. Selon un mode de réalisation particulier, le système de commande 10 vérifie en outre que la première connexion c1 est inhibée. Dès que la deuxième connexion c2 est inhibée, le système de commande 10 passe à une étape 5053. Sinon, le système de commande 10 retourne à l'étape 5051, ou alternativement reste à l'étape 5052 afin d'attendre l'inhibition de la deuxième connexion c2.

A l'étape 5053, le système de commande 10 établit la troisième connexion c3.

Ainsi, le moteur 13 ne peut pas être alimenté électriquement par le biais du deuxième lien électrique d'alimentation 112 lors du passage du premier état de connexion au deuxième état de connexion.

Selon un mode de réalisation, la troisième connexion c3 ou le lien intermédiaire 103 comporte une diode orientée de sorte à empêcher la circulation d'un courant entre l'alimentation électrique 11 et le moteur 13 par le biais du deuxième lien électrique d'alimentation 112, tout en permettant la circulation d'un courant entre le moteur 13 et le dispositif consommateur de courant électrique 12. Ainsi, l'alimentation électrique du moteur 13 par le biais du deuxième lien électrique d'alimentation 112 est empêchée.

De retour à la **Fig. 5****,** dans une étape 510 suivante, le système de commande 10 détermine si une commande d'arrêt du freinage de l'élément mobile articulé 14 est reçue par le système de commande 10 en provenance de l'avionique. Si c'est le cas, le système de commande 10 passe optionnellement à une étape 511 puis retourne à l'étape 501. Sinon, le système de commande 10 reste à l'étape 510.

L'étape 511 optionnelle est illustrée à la **Fig. 6B****.** Dans une étape 5111, le système de commande 10 inhibe la troisième connexion c3.

Dans une étape 5112 suivante, le système de commande 10 vérifie que la troisième connexion c3 est effectivement inhibée, par exemple au moyen d'un test électrique. Si c'est le cas, le système de commande 10 passe à l'étape 501 dans laquelle l'établissement de la deuxième connexion c2 est permis. Sinon, le système de commande 10 retourne à l'étape 5111, ou alternativement reste à l'étape 5112 afin d'attendre la déconnexion de la troisième connexion c3.

Ainsi, le moteur 13 ne peut pas être alimenté électriquement par le biais du deuxième lien électrique d'alimentation 112. Il est ainsi garanti que l'élément mobile articulé 14 ne peut entrer en mouvement de manière intempestive, autrement dit sans qu'une commande de déplacement de l'élément mobile articulé 14 ne soit envoyée par l'avionique.

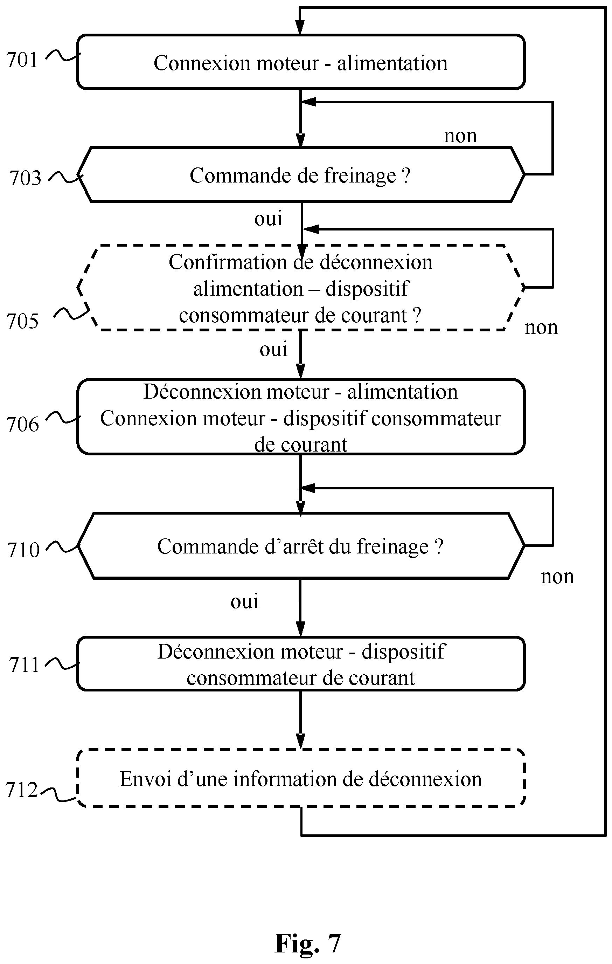

La **Fig. 7** illustre schématiquement un procédé de commande de l'élément mobile articulé 14 implémenté par le premier dispositif de commutation 101 du système de commande, selon le second mode de réalisation.

Dans une première étape 701, le premier dispositif de commutation 101 est dans le premier état de connexion et permet l'établissement de la première connexion c1 afin d'autoriser l'alimentation électrique du moteur 13. La quatrième connexion c3a est inhibée.

Dans une étape 703 suivante, le premier dispositif de commutation 101 détermine si une commande de freinage est reçue par le système de commande 10 en provenance de l'avionique. Si c'est le cas, une étape 705 optionnelle est effectuée, ou alternativement une étape 706. Sinon, le premier dispositif de commutation 101 reste à l'étape 703.

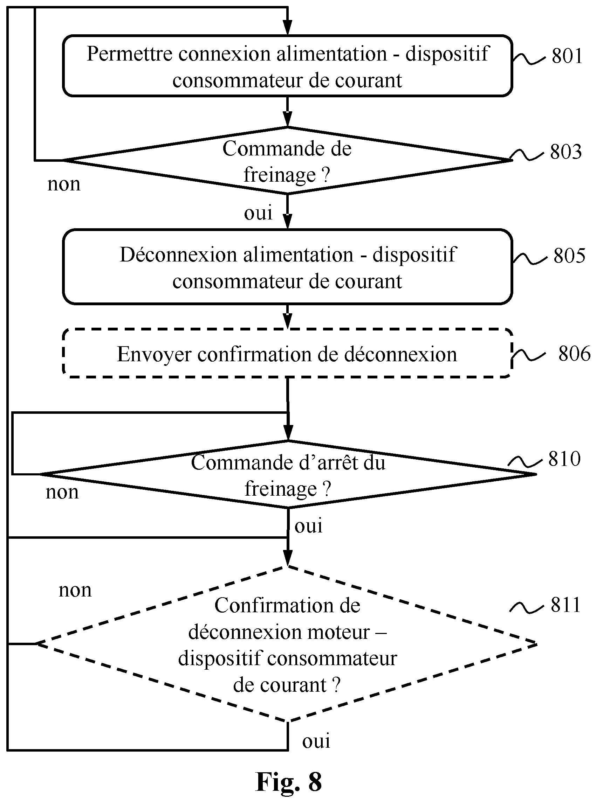

A l'étape 705 optionnelle, le premier dispositif de commutation 101 vérifie que la deuxième connexion c2 est inhibée. Pour cela, le premier dispositif de commutation 101 vérifie qu'une information représentative de l'inhibition de la deuxième connexion c2 est reçue en provenance du deuxième dispositif de commutation 102 ou du système de commande 10. Si c'est le cas, l'étape 706 est effectuée. Sinon, le premier dispositif de commutation 101 reste à l'étape 705. Selon un exemple de réalisation, l'étape 705 est implémentée par le premier dispositif de commutation 101 lorsqu'une étape 806 illustrée à la Fig. 8 est implémentée par le deuxième dispositif de commutation 102.

Selon un exemple de réalisation, si aucune information représentative de la déconnexion de la deuxième connexion c2 n'est reçue, le premier dispositif de commutation 101 envoie une demande de confirmation d'inhibition de la deuxième connexion c2 à destination du deuxième dispositif de commutation 102 et attend la réception de la confirmation avant de passer à l'étape 706.

A l'étape 706, le premier dispositif de commutation 101 inhibe la première connexion c1 et établit la quatrième connexion c3a afin de passer dans le deuxième état de connexion. Le moteur 13 n'est plus alimenté par l'alimentation électrique 11 et est relié électriquement au dispositif consommateur de courant électrique 12.

Dans une étape 710, le premier dispositif de commutation 101 détermine si une commande d'arrêt du freinage de l'élément mobile articulé 14 est reçue par le système de commande 10 en provenance de l'avionique. Si c'est le cas, une étape 711 est effectuée. Sinon, le premier dispositif de commutation 101 reste à l'étape 710.

A l'étape 711, le premier dispositif de commutation 101 inhibe la quatrième connexion c3a afin de déconnecter le moteur 13 du dispositif consommateur de courant électrique 12 puis passe à une étape 712 optionnelle avant de retourner à l'étape 701 pour passer dans le premier état de connexion.

Dans une étape 712 optionnelle, le premier dispositif de commutation 101 envoie une information représentative d'une inhibition de la quatrième connexion c3a au deuxième dispositif de commutation 102 ou au système de commande 10. Selon un mode de réalisation particulier, le premier dispositif de commutation 101 vérifie dans un premier temps que la quatrième connexion c3a est effectivement inhibée, par exemple au moyen d'un test électrique, puis envoie ladite information. Le premier dispositif de commutation 101 retourne ensuite à l'étape 701.

La **Fig. 8** illustre schématiquement un procédé de commande de l'élément mobile articulé 14 implémenté par le deuxième dispositif de commutation 102 du système de commande 10.

Dans une première étape 801, le deuxième dispositif de commutation 102 permet l'établissement de la deuxième connexion c2, afin de permettre l'établissement d'une connexion électrique entre l'alimentation électrique 11 et le dispositif consommateur de courant électrique 12 et pouvoir assurer une fonction de dégivrage par le dispositif consommateur de courant électrique 12.

Dans une étape 803 suivante, le deuxième dispositif de commutation 102 détermine si une commande de freinage est reçue par le système de commande 10 en provenance de l'avionique. Si c'est le cas, une étape 805 est effectuée. Sinon, le deuxième dispositif de commutation 102 retourne à l'étape 801, ou alternativement reste à l'étape 803 en attendant qu'une commande de freinage soit reçue.

A l'étape 805, le deuxième dispositif de commutation 102 inhibe la deuxième connexion c2 afin de déconnecter le dispositif consommateur de courant électrique 12 de l'alimentation électrique 11 et ainsi éviter que le moteur 13 ne puisse être alimenté électriquement par le biais du deuxième lien électrique d'alimentation 112. Le deuxième dispositif de commutation 102 établit en outre la cinquième connexion c3b si ladite cinquième connexion c3b est inhibée, afin de relier électriquement le moteur 13 et le dispositif consommateur de courant électrique 12.

Dans une étape 806 optionnelle, le deuxième dispositif de commutation 102 envoie une information représentative de l'inhibition de la deuxième connexion c2 au système de commande 10 ou au premier dispositif de commutation 101. Selon un mode de réalisation particulier, le deuxième dispositif de commutation 102 vérifie dans un premier temps que la deuxième connexion c2 est effectivement inhibée, par exemple au moyen d'un test électrique, puis envoie ladite information.

Dans une étape 810 suivante, le deuxième dispositif de commutation 102 détermine si une commande d'arrêt du freinage de l'élément mobile articulé 14 est reçue par le système de commande 10 en provenance de l'avionique. Si c'est le cas, le deuxième dispositif de commutation 102 inhibe la cinquième connexion c3b, lorsque l'inhibition est possible, puis effectue une étape 811 optionnelle avant de retourner à l'étape 801. Sinon, le deuxième dispositif de commutation 102 reste à l'étape 810 et attend de recevoir une commande d'arrêt du freinage de l'élément mobile articulé 14.

A l'étape 811, le deuxième dispositif de commutation 102 vérifie qu'une information représentative d'une inhibition de la quatrième connexion c3a est reçue en provenance du premier dispositif de commutation 101 ou du système de commande 10. Selon un exemple de réalisation, ladite information peut être reçue suite à l'implémentation de l'étape 712 par le premier dispositif de commutation 101. Si c'est le cas, le deuxième dispositif de commutation 102 retourne à l'étape 801. Sinon, le deuxième dispositif de commutation 102 reste à l'étape 801. Selon un exemple de réalisation, si aucune information représentative de la déconnexion de la quatrième connexion c3a n'est reçue, le deuxième dispositif de commutation 102 envoie une demande de confirmation d'inhibition de la quatrième connexion c3a à destination du premier dispositif de commutation 101 et attend la réception de la confirmation avant de retourner à l'étape 801.

## Revendications

1. Système de contrôle (1) comportant un système de commande (10) et de freinage d'un élément mobile articulé (14) par contrôle d'une consommation électrique d'un dispositif consommateur de courant électrique (12), ledit système de contrôle (1) comportant en outre une alimentation électrique (11), l'élément mobile articulé (14) et un moteur électrique d'élément mobile articulé (14), dit moteur (13), l'élément mobile articulé (14) étant actionné par ledit moteur (13), le système de commande (10) étant configuré pour recevoir des commandes de freinage de l'élément mobile articulé (14), dites commandes de freinage, et des commandes d'arrêt du freinage de l'élément mobile articulé (14), le système de commande (10) étant relié électriquement à ladite alimentation électrique (11), au moteur (13) et audit dispositif consommateur de courant électrique (12), le dispositif consommateur de courant électrique (12) étant configuré pour effectuer du dégivrage lorsque le dispositif consommateur de courant électrique (12) est alimenté électriquement, le système de commande (10) comprenant de la circuiterie électrique ou électronique configurée pour :
- permettre l'établissement d'une première connexion électrique (c1) entre l'alimentation électrique (11) et ledit moteur (13), permettre l'établissement d'une deuxième connexion électrique (c2) entre ladite alimentation électrique (11) et ledit dispositif consommateur de courant électrique (12) et inhiber une troisième connexion électrique (c3, c3a, c3b) entre ledit moteur (13) et ledit dispositif consommateur de courant électrique (12), tant qu'aucune commande de freinage n'est reçue et lorsqu'une commande d'arrêt du freinage de l'élément mobile articulé (14) est reçue,
- inhiber la première connexion (c1) électrique entre l'alimentation électrique (11) et le moteur (13), inhiber la deuxième connexion électrique (c2) entre l'alimentation électrique (11) et le dispositif consommateur de courant électrique (12) et établir la troisième connexion électrique (c3, c3a, c3b) entre le moteur (13) et le dispositif consommateur de courant électrique (12) lorsqu'une commande de freinage est reçue.

2. Système de contrôle (1) selon la revendication 1, le système de commande (10) comportant en outre un premier dispositif de commutation (101) et un second dispositif de commutation (102), le premier dispositif de commutation (101) étant relié électriquement au deuxième dispositif de commutation (102) par un lien électrique, dit lien intermédiaire (103), le premier dispositif de commutation (101) étant relié électriquement à l'alimentation électrique (11), au moteur (13) et au lien intermédiaire (103), le deuxième dispositif de commutation étant relié électriquement à l'alimentation électrique (11), au dispositif consommateur de courant électrique (12) et au lien intermédiaire (103), et dans lequel le premier dispositif de commutation (101) est configuré pour :
- inhiber une connexion électrique (c3a) entre le moteur (13) et le lien intermédiaire (103) tant qu'aucune commande de freinage n'est reçue et lorsqu'une commande d'arrêt du freinage est reçue,
- établir la connexion électrique (c3a) entre le moteur (13) et le lien intermédiaire (103) lorsqu'une commande de freinage est reçue,
et dans lequel le deuxième dispositif de commutation est configuré pour :
- établir une connexion électrique (c3b) entre le dispositif consommateur de courant électrique (12) et le lien intermédiaire (103) lorsqu'une commande de freinage est reçue.

3. Système de contrôle (1) selon la revendication 2, dans lequel le premier dispositif de communication est configuré pour :
- établir la connexion électrique (c3a) entre le moteur (13) et le lien intermédiaire (103) lorsqu'une commande de freinage est reçue et lorsqu'en outre une information représentative d'une absence de connexion électrique entre l'alimentation électrique (11) et le dispositif consommateur de courant électrique (12) est reçue,
et dans lequel le deuxième dispositif de commutation est configuré pour :
- envoyer une information représentative d'une absence de connexion électrique entre l'alimentation électrique (11) et le dispositif consommateur de courant électrique (12) dès que la connexion électrique entre l'alimentation électrique (11) et le dispositif consommateur de courant électrique (12) est inhibée.

4. Aéronef comportant un système de contrôle (1) selon l'une quelconque des revendications 1 à 3.

5. Procédé de commande d'un élément mobile articulé (14), implémenté par un système de commande (10) d'un élément mobile articulé (14) par contrôle d'une consommation électrique d'un dispositif consommateur de courant électrique (12), ledit système de commande (10) étant implémenté dans un système de contrôle (1) comportant une alimentation électrique (11), l'élément mobile articulé (14) et un moteur électrique d'élément mobile articulé (14), dit moteur (13), l'élément mobile articulé (14) étant actionné par ledit moteur (13), le système de commande (10) étant relié électriquement à ladite alimentation électrique (11), audit moteur (13) et audit dispositif consommateur de courant électrique (12), le dispositif consommateur de courant électrique (12) étant configuré pour effectuer du dégivrage lorsque le dispositif consommateur de courant électrique (12) est alimenté électriquement, le système de commande (10) étant configuré pour recevoir des commandes de freinage de l'élément mobile articulé (14), dites commandes de freinage, et d'arrêt du freinage de l'élément mobile articulé (14), le procédé comprenant:
- permettre l'établissement (503, 703) d'une première connexion électrique (c1) entre l'alimentation électrique (11) et le moteur (13), permettre l'établissement (801) d'une deuxième connexion électrique (c2) entre l'alimentation électrique (11) et le dispositif consommateur de courant électrique (12) et inhiber une troisième connexion électrique (c3, c3a, c3b) entre le moteur (13) et le dispositif consommateur de courant électrique (12), tant qu'aucune commande de freinage n'est reçue et lorsqu'une commande d'arrêt du freinage de l'élément mobile articulé (14) est reçue,
- inhiber (505, 706) la première connexion (c1) électrique entre l'alimentation électrique (11) et le moteur (13), inhiber (805) la deuxième connexion électrique (c2) entre l'alimentation électrique (11) et le dispositif consommateur de courant électrique (12) et établir (706) la troisième connexion électrique (c3, c3a, c3b) entre le moteur (13) et le dispositif consommateur de courant électrique (12) lorsqu'une commande de freinage est reçue.

6. Procédé selon la revendication précédente, dans lequel le système de commande (10) comporte un premier dispositif de commutation (101) et un second dispositif de commutation (102), le premier dispositif de commutation (101) étant relié électriquement au deuxième dispositif de commutation (102) par un lien électrique, dit lien intermédiaire (103), le premier dispositif de commutation (101) étant relié électriquement à l'alimentation électrique (11), audit moteur (13) et au lien intermédiaire (103), le deuxième dispositif de commutation étant relié électriquement à l'alimentation électrique (11), au dispositif consommateur de courant électrique (12) et au lien intermédiaire (103), et dans lequel le procédé comprend en outre :
- inhiber une connexion électrique (c3a) entre le moteur (13) et le lien intermédiaire (103) tant qu'aucune commande de freinage n'est reçue et lorsqu'une commande d'arrêt du freinage est reçue,
- établir la connexion électrique (c3a) entre le moteur (13) et le lien intermédiaire (103) lorsqu'une commande de freinage est reçue,
- établir une connexion électrique (c3b) entre le dispositif consommateur de courant électrique (12) et le lien intermédiaire (103) lorsqu'une commande de freinage est reçue.

7. Produit programme d'ordinateur, comprenant des instructions de code programme entraînant l'exécution, par un processeur d'un système de commande d'élément mobile articulé d'aéronef d'un système de contrôle (1) selon l'une des revendications 1 à 3, du procédé selon l'une des revendications 5 et 6, lorsque lesdites instructions sont exécutées par ledit processeur.

8. Support de stockage, stockant un programme d'ordinateur comportant des instructions de code de programme entraînant l'exécution, par un processeur d'un système de commande d'élément mobile articulé d'aéronef d'un système de contrôle (1) selon l'une des revendications 1 à 3, du procédé selon l'une des revendications 5 et 6, lorsque lesdites instructions sont lues et exécutées par ledit processeur.

## Patentansprüche

1. Steuerungssystem (1), umfassend ein Steuersystem (10) zum Steuern und Bremsen eines angelenkten beweglichen Elements (14) durch Steuern eines elektrischen Verbrauchs einer elektrischen Strom verbrauchenden Vorrichtung (12), wobei das Steuerungssystem (1) ferner eine elektrische Versorgung (11), das angelenkte bewegliche Element (14) und einen Elektromotor (14) des angelenkten beweglichen Elements, der als Motor (13) bezeichnet wird, umfasst, wobei das angelenkte bewegliche Element (14) durch den Motor (13) betätigt wird, wobei das Steuersystem (10) dazu ausgelegt ist, Befehle zum Bremsen des angelenkten beweglichen Elements (14), die als Bremsbefehle bezeichnet werden, und Befehle zum Stoppen des Bremsens des angelenkten beweglichen Elements (14) zu empfangen, wobei das Steuersystem (10) mit der elektrischen Versorgung (11), dem Motor (13) und der elektrischen Strom verbrauchenden Vorrichtung (12) elektrisch verbunden ist, wobei die elektrischen Strom verbrauchende Vorrichtung (12) dazu ausgelegt ist, ein Enteisen vorzunehmen, wenn die elektrischen Strom verbrauchende Vorrichtung (12) elektrisch versorgt wird, wobei das Steuersystem (10) eine elektrische oder elektronische Schaltungsanordnung umfasst, die zu Folgendem ausgelegt ist:
- Ermöglichen des Herstellens einer ersten elektrischen Verbindung (c1) zwischen der elektrischen Versorgung (11) und dem Motor (13), Ermöglichen des Herstellens zweiten elektrischen Verbindung (c2) zwischen der elektrischen Versorgung (11) und der elektrischen Strom verbrauchenden Vorrichtung (12) und Blockieren einer dritten elektrischen Verbindung (c3, c3a, c3b) zwischen dem Motor (13) und der elektrischen Strom verbrauchenden Vorrichtung (12), solange kein Bremsbefehl empfangen wird und wenn ein Befehl zum Stoppen des Bremsens des angelenkten beweglichen Elements (14) empfangen wird,
- Blockieren der ersten Verbindung (c1) zwischen der elektrischen Versorgung (11) und dem Motor (13), Blockieren der zweiten elektrischen Verbindung (c2) zwischen der elektrischen Versorgung (11) und der elektrischen Strom verbrauchenden Vorrichtung (12) und Herstellen der dritten elektrischen Verbindung (c3, c3a, c3b) zwischen dem Motor (13) und der elektrischen Strom verbrauchenden Vorrichtung (12), wenn ein Bremsbefehl empfangen wird.

2. Steuerungssystem (1) nach Anspruch 1, wobei das Steuersystem (10) ferner eine erste Schaltvorrichtung (101) und eine zweite Schaltvorrichtung (102) umfasst, wobei die erste Schaltvorrichtung (101) mit der zweiten Schaltvorrichtung (102) durch eine elektrische Verbindung durch eine elektrische Verbindung, die als Zwischenverbindung (103) bezeichnet wird, elektrisch verbunden ist, wobei die erste Schaltvorrichtung (101) mit der elektrischen Versorgung (11), dem Motor (13) und der Zwischenverbindung (103) elektrisch verbunden ist, wobei die zweite Schaltvorrichtung mit der elektrischen Versorgung (11), der elektrischen Strom verbrauchenden Vorrichtung (12) und der Zwischenverbindung (103) elektrisch verbunden ist und wobei die erste Schaltvorrichtung (101) zu Folgendem ausgelegt ist:
- Blockieren einer elektrischen Verbindung (c3a) zwischen dem Motor (13) und der Zwischenverbindung (103), solange kein Bremsbefehl empfangen wird und wenn ein Befehl zum Stoppen des Bremsens empfangen wird,
- Herstellen der elektrischen Verbindung (c3a) zwischen dem Motor (13) und der Zwischenverbindung (103), wenn ein Bremsbefehl empfangen wird, und wobei die zweite Schaltvorrichtung zu Folgendem ausgelegt ist:
- Herstellen einer elektrischen Verbindung (c3b) zwischen der elektrischen Strom verbrauchenden Vorrichtung (12) und der Zwischenverbindung (103), wenn ein Bremsbefehl empfangen wird.

3. Steuerungssystem (1) nach Anspruch 2, wobei die erste Kommunikationsvorrichtung zu Folgendem ausgelegt ist:
- Herstellen der elektrischen Verbindung (c3a) zwischen dem Motor (13) und der Zwischenverbindung (103), wenn ein Bremsbefehl empfangen wird und wenn ferner eine Information empfangen wird, die für ein Nichtvorliegen einer elektrischen Verbindung zwischen der elektrischen Versorgung (11) und der elektrischen Strom verbrauchenden Vorrichtung (12) repräsentativ ist,
und wobei die zweite Schaltvorrichtung zu Folgendem ausgelegt ist:
- Senden einer Information, die für ein Nichtvorliegen einer elektrischen Verbindung zwischen der elektrischen Versorgung (11) und der elektrischen Strom verbrauchenden Vorrichtung (12) repräsentativ ist, sobald die elektrische Verbindung zwischen der elektrischen Versorgung (11) und der elektrischen Strom verbrauchenden Vorrichtung (12) blockiert ist.

4. Luftfahrzeug, das ein Steuerungssystem (1) nach einem der Ansprüche 1 bis 3 umfasst.

5. Verfahren zum Steuern eines angelenkten beweglichen Elements (14), das durch ein Steuersystem (10) zum Steuern eines angelenkten beweglichen Elements (14) implementiert wird, durch Steuerung eines elektrischen Verbrauchs einer elektrischen Strom verbrauchenden Vorrichtung (12), wobei das Steuersystem (10) in ein Steuerungssystem (1) implementiert ist, das eine elektrische Versorgung (11), das angelenkte bewegliche Element (14) und einen elektrischen Motor des angelenkten beweglichen Elements (14), der als Motor (13) bezeichnet wird, umfasst, wobei das angelenkte bewegliche Element (14) durch den Motor (13) betätigt wird, wobei das Steuersystem (10) mit der elektrischen Versorgung (11), dem Motor (13) und der elektrischen Strom verbrauchenden Vorrichtung (12) elektrisch verbunden ist, wobei die elektrischen Strom verbrauchende Vorrichtung (12) dazu ausgelegt ist, ein Enteisen vorzunehmen, wenn die elektrischen Strom verbrauchende Vorrichtung (12) elektrisch versorgt wird, wobei das Steuersystem (10) dazu ausgelegt ist, Befehle zum Bremsen des angelenkten beweglichen Element (14), die als Bremsbefehle bezeichnet werden, und zum Stoppen des Bremsens des angelenkten beweglichen Elements (14) zu empfangen, wobei das Verfahren Folgendes umfasst:
- Ermöglichen des Herstellens (503, 703) einer ersten elektrischen Verbindung (c1) zwischen der elektrischen Versorgung (11) und dem Motor (13), Ermöglichen des Herstellens (801) einer zweiten elektrischen Verbindung (c2) zwischen der elektrischen Versorgung (11) und der elektrischen Strom verbrauchenden Vorrichtung (12) und Blockieren einer dritten elektrischen Verbindung (c3, c3a, c3b) zwischen dem Motor (13) und der elektrischen Strom verbrauchenden Vorrichtung (12), solange kein Bremsbefehl empfangen wird und wenn ein Befehl zum Stoppen des Bremsens des angelenkten beweglichen Elements (14) empfangen wird,
- Blockieren (505, 706) der ersten elektrischen Verbindung (c1) zwischen der elektrischen Versorgung (11) und dem Motor (13), Blockieren (805) der zweiten elektrischen Verbindung (c2) zwischen der elektrischen Versorgung (11) und der elektrischen Strom verbrauchenden Vorrichtung (12) und Herstellen (706) der dritten elektrischen Verbindung (c3, c3a, c3b) zwischen dem Motor (13) und der elektrischen Strom verbrauchenden Vorrichtung (12), wenn ein Bremsbefehl empfangen wird.

6. Verfahren nach dem vorhergehenden Anspruch, wobei das Steuersystem (10) eine erste Schaltvorrichtung (101) und eine zweite Schaltvorrichtung (102) umfasst, wobei die erste Schaltvorrichtung (101) mit der zweiten Schaltvorrichtung (102) durch eine elektrische Verbindung, die als Zwischenverbindung (103) bezeichnet wird, elektrisch verbunden ist, wobei die erste Schaltvorrichtung (101) mit der elektrischen Versorgung (11), dem Motor (13) und der Zwischenverbindung (103) elektrisch verbunden ist, wobei die zweite Schaltvorrichtung mit der elektrischen Versorgung (11), der elektrischen Strom verbrauchenden Vorrichtung (12) und der Zwischenverbindung (103) elektrisch verbunden ist, und wobei das Verfahren ferner Folgendes umfasst:
- Blockieren einer elektrischen Verbindung (c3a) zwischen dem Motor (13) und der Zwischenverbindung (103), solange kein Bremsbefehl empfangen wird und wenn ein Befehl zum Stoppen des Bremsens empfangen wird,
- Herstellen der elektrischen Verbindung (c3a) zwischen dem Motor (13) und der Zwischenverbindung (103), wenn ein Bremsbefehl empfangen wird,
- Herstellen einer elektrischen Verbindung (c3b) zwischen der elektrischen Strom verbrauchenden Vorrichtung (12) und der Zwischenverbindung (103), wenn ein Bremsbefehl empfangen wird.

7. Computerprogrammprodukt, das Programmcodeanweisungen umfasst, die das Ausführen des Verfahrens nach einem der Ansprüche 5 und 6 durch einen Prozessor eines Steuersystems eines angelenkten beweglichen Elements eines Luftfahrzeugs eines Steuerungssystems (1) nach einem der Ansprüche 1 bis 3 bewirken, wenn die Anweisungen durch den Prozessor ausgeführt werden.

8. Speichermedium, das ein Computerprogramm speichert, das Programmcodeanweisungen umfasst, die das Ausführen des Verfahrens nach einem der Ansprüche 5 und 6 durch einen Prozessor eines Steuersystems eines angelenkten beweglichen Elements eines Luftfahrzeugs eines Steuerungssystems (1) nach einem der Ansprüche 1 bis 3 bewirken, wenn die Anweisungen durch den Prozessor gelesen und ausgeführt werden.

## Claims

1. Control system (1) including a system (10) for commanding and braking an articulated mobile element (14) by controlling electrical consumption of an electrical current consuming device (12), said control system (1) further including an electrical power supply (11), the articulated mobile element (14) and an articulated mobile element (14) electric motor, called a motor (13), the articulated mobile element (14) being actuated by said motor (13), the command system (10) being configured to receive commands to brake the articulated mobile element (14), called braking commands, and commands to stop braking the articulated mobile element (14), the command system (10) being electrically connected to said electrical power supply (11), to the motor (13) and to said electrical current consuming device (12), the electrical current consuming device (12) being configured to effect de-icing when the electrical current consuming device (12) is electrically powered, the command system (10) including electrical or electronic circuitry configured:
- to enable a first electrical connection (c1) to be established between the electrical power supply (11) and said motor (13), to enable a second electrical connection (c2) to be established between said electrical power supply (11) and said electrical current consuming device (12), and to inhibit a third electrical connection (c3, c3a, c3b) between said motor (13) and said electrical current consuming device (12) as long as no braking command is received and when a command to stop braking the articulated mobile element (14) is received,
- to inhibit the first electrical connection (c1) between the electrical power supply (11) and the motor (13), to inhibit the second electrical connection (c2) between the electrical power supply (11) and the electrical current consuming device (12), and to establish the third electrical connection (c3, c3a, c3b) between the motor (13) and the electrical current consuming device (12) when a braking command is received.

2. Control system (1) according to Claim 1, the command system (10) further including a first switching device (101) and a second switching device (102), the first switching device (101) being electrically connected to the second switching device (102) by an electrical link, called an intermediate link (103), the first switching device (101) being electrically connected to the electrical power supply (11), to the motor (13) and to the intermediate link (103), the second switching device being electrically connected to the electrical power supply (11), to the electrical current consuming device (12), and to the intermediate link (103), and in which the first switching device (101) is configured:
- to inhibit an electrical connection (c3a) between the motor (13) and the intermediate link (103) as long as no braking command is received and when a command to stop braking is received,
- to establish the electrical connection (c3a) between the motor (13) and the intermediate link (103) when a braking command is received,
and in which the second switching device is configured:
- to establish an electrical connection (c3b) between the electrical current consuming device (12) and the intermediate link (103) when a braking command is received.

3. Control system (1) according to Claim 2, in which the first communication device is configured:
- to establish the electrical connection (c3a) between the motor (13) and the intermediate link (103) when a braking command is received and further when information representing an absence of electrical connection between the electrical power supply (11) and the electrical current consuming device (12) is received,
and in which the second switching device is configured:
- to send information representing an absence of electrical connection between the electrical power supply (11) and the electrical current consuming device (12) as soon as the electrical connection between the electrical power supply (11) and the electrical current consuming device (12) is inhibited.

4. Aircraft including a control system (1) according to any one of Claims 1 to 3.

5. Method of commanding an articulated mobile element (14) implemented by a system (10) for commanding an articulated mobile element (14) by controlling electrical consumption of an electrical current consuming device (12), said command system (10) being implemented in a control system (1) including an electrical power supply (11), the articulated mobile element (14) and an articulated mobile element (14) electric motor, called a motor (13), the articulated mobile element (14) being actuated by said motor (13), the command system (10) being electrically connected to said electrical power supply (11), to said motor (13), and to said electrical current consuming device (12), the electrical current consuming device (12) being configured to effect de-icing when the electrical current consuming device (12) is electrically powered, the command system (10) being configured to receive commands to brake the articulated mobile element (14), called braking commands, and for stopping braking of the articulated mobile element (14), the method including:
- enabling a first electrical connection (c1) to be established (503, 703) between the electrical power supply (11) and the motor (13), enabling a second electrical connection (c2) to be established (801) between the electrical power supply (11) and the electrical current consuming device (12), and inhibiting a third electrical connection (c3, c3a, c3b) between the motor (13) and the electrical current consuming device (12) as long as no braking command is received and when a command to stop braking the articulated mobile element (14) is received,
- inhibiting (505, 706) the first electrical connection (c1) between the electrical power supply (11) and the motor (13), inhibiting (805) the second electrical connection (c2) between the electrical power supply (11) and the electrical current consuming device (12), and establishing (706) the third electrical connection (c3, c3a, c3b) between the motor (13) and the electrical current consuming device (12) when a braking command is received.

6. Method according to the preceding claim, in which the command system (10) includes a first switching device (101) and a second switching device (102), the first switching device (101) being electrically connected to the second switching device (102) by an electrical link, called an intermediate link (103), the first switching device (101) being electrically connected to the electrical power supply (11), to said motor (13) and to the intermediate link (103), the second switching device being electrically connected to the electrical power supply (11), to the electrical current consuming device (12), and to the intermediate link (103), and in which the method further includes:
- inhibiting an electrical connection (c3a) between the motor (13) and the intermediate link (103) as long as no braking command is received and when a command to stop braking is received,
- establishing the electrical connection (c3a) between the motor (13) and the intermediate link (103) when a braking command is received,
- establishing an electrical connection (c3b) between the electrical current consuming device (12) and the intermediate link (103) when a braking command is received.

7. Computer program product including program code instructions causing the execution, by a processor of an aircraft articulated mobile element command system of a control system (1) according to one of Claims 1 to 3, of the method according to one of Claims 5 and 6 when said instructions are executed by said processor.

8. Storage medium storing a computer program including program code instructions causing the execution, by a processor of an aircraft articulated mobile element command system of a control system (1) according to one of Claims 1 to 3, of the method according to one of Claims 5 and 6 when said instructions are read and executed by said processor.
